(19) Europäisches Patentamt / European Patent Office / Office européen des brevets

(11) **EP 4 501 873 B1**

(12) **EUROPEAN PATENT SPECIFICATION**

(45) Date of publication and mention
of the grant of the patent:
**25.02.2026 Bulletin 2026/09**

(21) Application number: **23841858.6**

(22) Date of filing: **04.05.2023**

(51) International Patent Classification (IPC):
*C03C 3/095* (2006.01)      *C03C 3/062* (2006.01)

(52) Cooperative Patent Classification (CPC):
**C03B 19/02; C03C 3/068; C03C 3/095**

(86) International application number:
**PCT/CN2023/092002**

(87) International publication number:
**WO 2024/016788 (25.01.2024 Gazette 2024/04)**

(54) **YTTRIUM ALUMINOSILICATE GLASS, PREPARATION METHOD THEREFOR, AND ELECTRONIC DEVICE**

YTTRIUM-ALUMINIUMSILIKATGLAS, HERSTELLUNGSVERFAHREN DAFÜR UND ELEKTRONISCHE VORRICHTUNG

VERRE D'ALUMINOSILICATE D'YTTRIUM, SON PROCÉDÉ DE PRÉPARATION ET DISPOSITIF ÉLECTRONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.07.2022 CN 202210856670**

(43) Date of publication of application:
**05.02.2025 Bulletin 2025/06**

(73) Proprietors:
• **Honor Device Co., Ltd.**
**Shenzhen, Guangdong 518040 (CN)**
• **Shanghai Institute of Optics and Fine Mechanics Chinese Academy of Sciences**
**Shanghai 201800 (CN)**

(72) Inventors:
• **JIANG, Xiaoqi**
**Shenzhen, Guangdong 518040 (CN)**
• **WANG, Xin**
**Shenzhen, Guangdong 518040 (CN)**
• **SHI, Zhenguo**
**Shenzhen, Guangdong 518040 (CN)**
• **XU, Wenbin**
**Shenzhen, Guangdong 518040 (CN)**
• **HAN, Shuai**
**Shenzhen, Guangdong 518040 (CN)**

(74) Representative: **Beder, Jens**
**Mitscherlich PartmbB**
**Patent- und Rechtsanwälte**
**Karlstraße 7**
**80333 München (DE)**

(56) References cited:
WO-A1-2018/199046        CN-A- 1 207 086
CN-A- 110 546 115        CN-A- 111 747 654
CN-A- 112 851 113        JP-A- 2001 261 365
JP-A- 2004 352 571        JP-A- 2004 352 571
US-A1- 2019 300 422

## Description

This application claims priority to Chinese Patent Application CN 117 486 486 A (Application No. 202210856670.8), filed with the China National Intellectual Property Administration on July 20, 2022 and entitled "YTTRIUM ALUMINOSILICATE GLASS, PREPARATION METHOD, AND ELECTRONIC DEVICE".

## TECHNICAL FIELD

This application relates to the field of glass technologies, and specifically, to yttrium aluminosilicate glass, an yttrium aluminosilicate glass preparation method, and an electronic device.

## BACKGROUND

With rapid development of the electronic information industry, electronic products such as mobile phones, bracelets, and tablet computers increasingly become essential for daily life. With consumers' ultimate pursuit for product appearance, sizes of displays of electronic products gradually increase, and new forms such as 3D models, foldable screens, and scroll screens emerge. Usually, a display cover plate, a rear battery cover, a camera protection cover plate, and the like of an electronic product are made of a glass material. This poses higher requirements on flexural strength, scratch resistance, and drop resistance of the glass materia 1.

US 2019/300422 A1 discloses glass compositions suitable as cover glass for electronic devices.

At present, aluminate glass or silicate glass is often used as the glass material. A glass former in the aluminate glass is $Al_2O_3$, which has a small glass forming interval, and is highly susceptible to an external additive. Consequently, undesirable phenomena such as crystallization and phase splitting occur. Although the silicate glass has excellent glass forming properties, mechanical properties are poor because a bulk density ($V_i$), a high elastic modulus coefficient ($E_i$), and a high specific modulus coefficient ($S_i$) of a component of the silicate glass are low. Therefore, surface hardness, flexural strength, fracture toughness properties, and the like of the aluminate glass and the silicate glass are low, and cannot meet an actual application requirement.

## SUMMARY

This application provides yttrium aluminosilicate glass, a preparation method, and an electronic device, to resolve a problem that surface hardness, flexural strength, fracture toughness properties, and the like of aluminate glass and silicate glass are low, and cannot meet an actual application requirement. The invention is defined in the independent claims. Additional features of the invention are provided in the dependent claims. In the following, parts of the description and drawings referring to embodiments, which are not covered by the claims, are not presented as embodiments of the invention but as examples useful for understanding the invention.

According to a first aspect, this application provides yttrium aluminosilicate glass. Expressed in mole percentage of an oxide, the yttrium aluminosilicate glass includes the following components:

$SiO_2$ 20-50%;

$Al_2O_3$ 15-40%;

MgO 10-35%;

$Y_2O_3$ 5-35%;

$TiO_2$ 0.1-15%;

$ZrO_2$ 0.1-15%;

$Na_2O$ 0.1-15%;

$Li_2O$ 0.1-15%;

$K_2O$ 0.1-15%;

$B_2O_3$ 0.1-10%;

BaO 0.1-10%;

SrO 0.1-10%;

$Sb_2O_3$ 0.1-10%;

and

$La_2O_3$ 0.1-10%.

In the foregoing provided yttrium aluminosilicate glass, an oxide with a high bulk density, a high elastic modulus coefficient, and a high specific modulus coefficient is introduced into a glass system, and components and a component configuration are properly adjusted and controlled. A glass forming capability is strong, and a structure density and strength of the glass are high. This improves drop resistance and mechanical properties such as Vickers hardness, Mohs hardness, and a Young's modulus of the glass. In addition, the yttrium aluminosilicate glass has a high light transmittance in a visible light band, and may be widely used in portable and wearable electronic devices.

In an optional implementation, expressed in mole percentage of an oxide, $0.3\% \leqq Li_2O+Na_2O+K_2O \leqq 15\%$.

In this implementation, the yttrium aluminosilicate glass can perform high-efficiency ion exchange chemical strengthening. This helps improve a depth of an ion exchange layer and increase deep stress, thereby improving scratch resistance and drop resistance.

In an optional implementation, expressed in mole percentage of an oxide, $40\% \leqq Al_2O_3+MgO+Y_2O_3 \leqq 60\%$.

In this implementation, a glass forming capability, Vickers hardness, and a Young's modulus can be improved. This helps prepare high-strength yttrium aluminosilicate glass.

In an optional implementation, expressed in mole percentage of an oxide, the mole percentage of $ZrO_2$ is 1-15%.

In this implementation, Vickers hardness and toughness of the yttrium aluminosilicate glass can be improved, and a high visible light transmittance and high flexural strength can be maintained.

In an optional implementation, expressed in mole percentage of an oxide, the mole percentage of $B_2O_3$ is 2-10%.

In this implementation, properties such as surface hardness, flexural strength, and fracture toughness of the glass can be improved. This helps prepare high-strength yttrium aluminosilicate glass.

In an optional implementation, a light transmittance of the yttrium aluminosilicate glass in a visible light band is greater than or equal to 88%.

In an optional implementation, a Young's modulus of the yttrium aluminosilicate glass is greater than 100 GPa.

In an optional implementation, Vickers hardness of the yttrium aluminosilicate glass is greater than 6.87 GPa.

In an optional implementation, Mohs hardness of the yttrium aluminosilicate glass is greater than or equal to 7 and less than or equal to 9.

According to a second aspect, this application provides an yttrium aluminosilicate glass preparation method, specifically including the following steps:

mixing raw materials required for meeting the yttrium aluminosilicate glass in the first aspect, to obtain a powder mixture after mixing;
melting the powder mixture for 2~3 h at a temperature of 1400~1600°C, and stirring the mixture evenly to obtain molten glass;
pouring the molten glass into a preheated mold for molding, to obtain a glass former; and
after heat preservation is performed on the glass former for 3~5 h at a temperature of 650~850°C, cooling down to an indoor temperature at a preset rate to obtain the yttrium aluminosilicate glass.

According to the foregoing provided yttrium aluminosilicate glass preparation method, based on a silicate system, oxides with high bulk densities, high elastic modulus coefficients, and high specific modulus coefficients are introduced. Components and a component configuration are properly adjusted and controlled, so that the manufactured yttrium aluminosilicate glass has a high transmittance, and mechanical properties such as surface hardness, fracture strength, and fracture toughness of the glass are improved. In addition, a preparation process is simple, costs are low, and application to industrial production is easy.

In an optional implementation, a temperature of the mold is 500~600°C.

In an optional implementation, the preset rate is 1~10°C/h.

In an optional implementation, expressed by a mass ratio of the yttrium aluminosilicate glass, the raw materials include: 9.08 g $SiO_2$, 24.46 g $Al_2O_3$, 8.06 g MgO, 22.57 g $Y_2O_3$, 2.00 g $TiO_2$, 4.31 g $ZrO_2$, 6.36 g $Na_2CO_3$, 1.48 g $Li_2CO_3$, 0.69 g $K_2CO_3$, 1.79 g $H_3BO_3$, 1.38 g $BaCO_3$, 0.15 g $SrCO_3$, 0.33 g $La_2O_3$, and 0.29 g $Sb_2O_3$.

In an optional implementation, the method specifically includes the following steps:

mixing the raw materials, to obtain a powder mixture after mixing;
melting the powder mixture for 2 h at a temperature of 1560°C, and stirring the mixture evenly to obtain molten glass;
pouring the molten glass into the mold that has been preheated to a temperature of 550°C for molding, to obtain a glass former; and
after heat preservation is performed on the glass former for 2 h at a temperature of 720°C, cooling down to an indoor temperature at a preset rate of 5°C/h to obtain the yttrium aluminosilicate glass.

In an optional implementation, this application provides application of the yttrium aluminosilicate glass in an electronic device, a building material, and transportation equipment.

The yttrium aluminosilicate glass provided in this application is not only applicable to electronic devices, but also applicable to fields such as transportation and building. The yttrium aluminosilicate glass may be specifically used for protection glass in fields such as transportation vehicles, household appliances, and building, for example, protection glass of a display or a meter protection cover.

According to a third aspect, this application provides an electronic device, including a display cover plate. The display cover plate uses the yttrium aluminosilicate glass in the first aspect.

In an optional implementation, the electronic device further includes a rear battery cover, and the rear battery cover uses the yttrium aluminosilicate glass in the first aspect.

In an optional implementation, the electronic device further includes a camera component and a camera protection cover plate, the camera protection cover plate covers the camera component, and the camera protection cover plate uses the yttrium aluminosilicate glass in the first aspect.

In an implementation provided in this application, one or more of the display cover plate, the rear battery cover, and the camera protection cover plate of the electronic device provided in this application may use the foregoing yttrium aluminosilicate glass.

BRIEF DESCRIPTION OF DRAWINGS

To describe technical solutions of this application more clearly, the following briefly describes accompanying drawings used in embodiments. It is clear that a person of ordinary skill in the art may still derive other accompanying drawings from these accompanying drawings without creative efforts.

FIG. 1 is a diagram of a structure of an electronic device according to an embodiment of this application;
FIG. 2 is a diagram of property comparison between aluminate glass, silicate glass, and yttrium aluminosilicate glass according to an embodiment of this application;
FIG. 3 is a schematic flowchart of an yttrium aluminosilicate glass preparation method according to an embodiment of this application;
FIG. 4 shows light transmittance curves of yttrium aluminosilicate glass according to Embodiment 2, Embodiment 4, and Embodiment 6 of this application;
FIG. 5 is a diagram of a test on Vickers hardness of yttrium aluminosilicate glass according to Embodiment 7 of this application; and
FIG. 6 is a micrograph of Mohs hardness-based scratches on yttrium aluminosilicate glass according to Embodiment 1 and Embodiment 6 of this application.

DESCRIPTION OF EMBODIMENTS

To make the technical solutions of this application more comprehensible for a person skilled in the art, the following clearly and completely describes the technical solutions in embodiments of this application with reference to the accompanying drawings in embodiments of this application. It is clear that the described embodiments are merely some rather than all of embodiments of this application. Based on embodiments of this application, all other embodiments obtained by a person of ordinary skill in the art without creative efforts shall fall within the protection scope of this application.

An electronic device 100 in embodiments of this application may be an electronic device that includes a glass material, for example, a mobile phone, a vehicle-mounted device (also referred to as an on-board unit), a tablet computer, a notebook computer, an ultra-mobile personal computer (ultra-mobile personal computer, UMPC), a handheld computer, a netbook, a personal digital assistant (personal digital assistant, PDA), a wearable electronic device, or a virtual reality device. This is not limited in embodiments of this application.

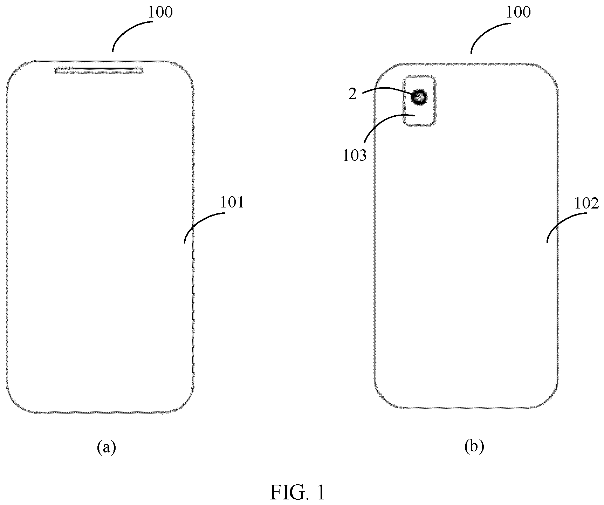

Using a mobile phone as an example of the foregoing electronic device 100, a in FIG. 1 is a front view of the mobile phone. Refer to FIG. 1. The electronic device 100 includes a display cover plate 101 on a front side. b in FIG. 1 is a rear view of the mobile phone. Still refer to FIG. 1. The electronic device 100 further includes a rear battery cover 102 on a rear side. The display cover plate 101 covers a display panel, to isolate and protect the display panel, so as to avoid damage to the display panel caused by an external thing or force. The display panel is configured to display an image, a video, and the like. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light-emitting diode (quantum dot light emitting diodes, QLED), or the like.

The display cover plate 101 and/or the rear battery cover 102 are/is made of yttrium aluminosilicate glass, and are/is transparent in a visible light band. The yttrium aluminosilicate glass provided in this application has good properties such as hardness, flexural strength, and fracture toughness, and improved properties such as scratch resistance and drop resistance. Therefore, the yttrium aluminosilicate glass is less likely to be damaged. In addition, the display cover plate 101 has a high light transmittance, and therefore does not affect use of the display panel below the display cover plate. It should be noted that the display cover plate 101 and the rear battery cover 102 may be completely made of the yttrium alumino silicate glass, or may be partially made of the yttrium aluminosilicate glass.

The electronic device 100 may further include other necessary components such as a processor, an external memory interface, an internal memory, a universal serial bus (universal serial bus, USB) interface, a charging management module, a power management module, a battery, an antenna, a mobile communication module, a wireless communication module, an audio module, a speaker, a receiver, a microphone, a headset jack, a sensor module, a button, a motor, an indicator, and a camera.

In some implementations of this application, still referring to b in FIG. 1, the electronic device 100 further includes a camera component 2 and a camera protection cover plate 103. The camera protection cover plate 103 covers the camera component 2, and the camera protection cover plate 103 may be made of the yttrium aluminosilicate glass. It should be noted that the camera protection cover plate 103 may be partially made of the yttrium aluminosilicate glass, or may be completely made of the yttrium aluminosilicate glass.

In some implementations of this application, a disposing position of the camera protection cover plate 103 may be determined based on a disposing position of the camera component 2. For example, the camera protection cover plate may be located on a front side of the electronic device 100, or may be located on a rear side of the electronic device 100. In addition, the camera protection cover plate 103 may be disposed in an appropriate position on the front side or the rear side of the electronic device 100. This depends on a position of the camera component 2 in the electronic device 100.

In some implementations of this application, the camera protection cover plate 103 may be separated from the display cover plate 101 or the rear battery cover 102. Alternatively, the camera protection cover plate may be integrated with the display cover plate 101 or the rear battery cover 102.

In some implementations of this application, any one, any two, or all of the display cover plate 101, the rear battery cover 102, and the camera protection cover plate 103 in the electronic device 100 may be made of the yttrium aluminosilicate glass. The yttrium aluminosilicate glass provided in this application has a high light transmittance and excellent mechanical properties such as Vickers hardness, Mohs hardness, and a Young's modulus, can improve reliability of an electronic device product, and can meet optical requirements of display and photographing of the display cover plate and the camera protection cover plate.

The yttrium aluminosilicate glass provided in this application is further described below.

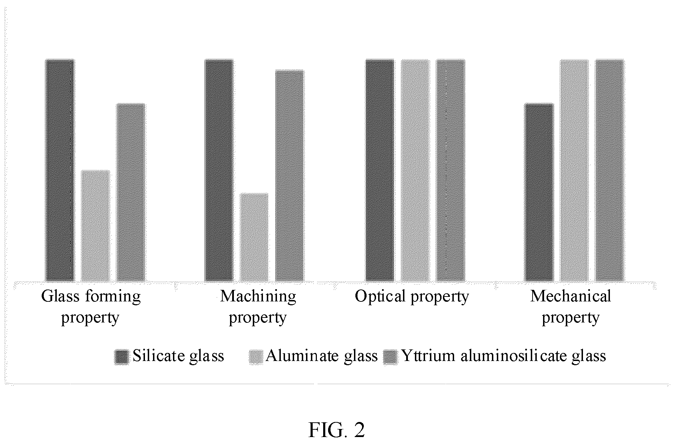

Refer to FIG. 2. Currently, a glass material commonly used in an electronic device is aluminate glass or silicate glass. A glass former in the aluminate glass is $Al_2O_3$, which has a small glass forming interval and a low machining property, and is highly susceptible to an external additive. Consequently, undesirable phenomena such as crystallization and phase splitting occur. Although the silicate glass has excellent glass forming properties, mechanical properties are poor because a bulk density ($V_i$), a high elastic modulus coefficient ($E_i$), and a high specific modulus coefficient ($S_i$) of a component of the silicate glass are low. Based on a silicate glass system, oxides with high bulk densities, high elastic modulus coefficients, and high specific modulus coefficients are introduced into the yttrium aluminosilicate glass provided in this application. Mechanical properties such as Vickers hardness, Mohs hardness, and a Young's modulus are improved by properly adjusting and controlling components and a component configuration, so that high-strength yttrium aluminosilicate glass is obtained.

In some implementations of this application, expressed in mole percentage of an oxide, the yttrium aluminosilicate glass specifically includes the following components: $SiO_2$ 20-50%; $Al_2O_3$ 15-40%; MgO 10-35%; $Y_2O_3$ 5-35%; $TiO_2$ 0.1-15%; $ZrO_2$ 0.1-15%; $Na_2O$ 0.1-15%; $Li_2O$ 0.1-15%; $K_2O$ 0.1-15%; $B_2O_3$ 0.1-10%; BaO 0.1-10%; SrO 0.1-10%; $Sb_2O_3$ 0.1-10%; and $La_2O_3$ 0.1-10%.

In this application, a relationship between the components in the yttrium aluminosilicate glass is controlled, and in particular, a relationship between $Li_2O$, $Na_2O$, $K_2O$, $ZrO_2$, and $B_2O_3$ is controlled, to perform high-efficiency ion exchange chemical strengthening, so as to improve a structure density and strength of the glass, so that mechanical properties such as Vickers hardness, Mohs hardness, and a Young's modulus of the glass are improved.

In some implementations of this application, Table 1 is a schematic table of main oxide components of the foregoing yttrium aluminosilicate glass and bulk densities (Vi), elastic modulus coefficients (Ei), specific modulus coefficients (Si), and mole content of the main oxide components. Refer to Table 1. Oxides with high bulk densities, high elastic modulus coefficients, and high specific modulus coefficients that are introduced in this application include: MgO, $TiO_2$, $ZrO_2$, $Al_2O_3$, and $Y_2O_3$. The foregoing oxide components are introduced and properly adjusted and controlled, so that it is ensured that the yttrium aluminosilicate glass has higher Vickers hardness, higher Mohs hardness, and a higher Young's modulus, thereby reducing a penetration depth of a sharp object. In addition, a crack tip is bent and passivated, and crack work is increased, so that crack propagation is effectively suppressed. Drop resistance of the glass is further improved while the crack propagation is suppressed.

**Table 1**

| Component | Bulk density ($V_i$) | Elastic modulus coefficient ($E_i$)/(GPa/mol) | Specific modulus coefficient ($S_i$)/(MN m/kg mol) | Mole content mol% |
|---|---|---|---|---|
| $SiO_2$ | 0.541 | 73.0 | 32.8 | 20~50 |
| $Al_2O_3$ | 0.832 | 173.8 | 43.8 | 15~40 |
| MgO | 0.731 | 138.6 | 38.7 | 10~35 |
| $Y_2O_3$ | 0.865 | 237.7140 | 40.8 | 5~35 |
| $TiO_2$ | 0.779 | 151.2 | 35.5 | 0.1~15 |
| $ZrO_2$ | 0.846 | 192.2 | 32.6 | 0.1~15 |
| $Na_2O$ | 0.410 | 30.2 | 13.3 | 0.1~15 |
| $Li_2O$ | 0.539 | 87.4 | 43.4 | 0.1~15 |
| $K_2O$ | 0.463 | 22.0 | 9.5 | 0.1~15 |
| $B_2O_3$ | 0.541 | 83.4 | 33.9 | 0.1~10 |
| BaO | 0.533 | 43.2 | 7.6 | 0.1~10 |
| SrO | 0.548 | 53.2 | 11.3 | 0.1~10 |
| $La_2O_3$ | 0.568 | 77.0 | 11.8 | 0.1~10 |

Specifically, in the foregoing yttrium aluminosilicate glass system, $SiO_2$ is used as a skeleton component of a glass network structure. Content of $SiO_2$ directly affects development of the network structure, and greatly affects an overall property of the glass. Higher content of $SiO_2$ in the glass system indicates a denser glass network structure, higher mechanical strength, a smaller thermal expansion coefficient, and better heat resistance, dielectric property, and chemical stability. However, if the content of $SiO_2$ is excessively high, melt viscosity of the glass is high, and glass forming is difficult. To meet a property requirement, a mole percentage of $SiO_2$ in the yttrium aluminosilicate glass in this application is preferably 20-50%.

$Al_2O_3$ is a network intermediate, and participates in network structure forming, to strengthen the network structure. In addition, introduction of $Al_2O_3$ increases viscosity of high-temperature molten glass, so that a material property of the glass is shortened, and forming difficulty increases. In addition, $Al_2O_3$ greatly affects subsequent ion exchange for the yttrium aluminosilicate glass. Therefore, when content of $Al_2O_3$ is excessively high, especially when the content of $Al_2O_3$ is higher than that of alkali metal, $Al^{3+}$ exists as a network modifier, a coordination number increases, and the network structure tends to increase. That is, excessively high content of $Al_2O_3$ adversely affects an ion exchange effect. Based on this, to meet a property requirement, a mole percentage of $Al_2O_3$ in the yttrium aluminosilicate glass in this application is preferably 15-40%.

MgO has two coordination states in the glass, and can form a $[MgO_4]$ tetrahedron and a $[MgO_6]$ octahedron. Generally, most of MgO is located in the $[MgO_6]$ octahedron and acts as a network modifier. Only when content an alkali metal oxide is high and oxides such as $Al_2O_3$ and $B_2O_3$ are not included, a $Mg^{2+}$ ion may be located in the $[MgO_4]$ tetrahedron. Introduction of MgO properly increases surface compressive stress of chemically strengthened glass obtained after ion exchange, but reduces a depth of a compressive stress layer. Based on this, a mole percentage of MgO in the yttrium aluminosilicate glass in this application is preferably 10-35%. In addition, to meet glass properties of the yttrium aluminosilicate glass, a mole percentage of $Al_2O_3$+MgO+$Y_2O_3$ in the yttrium aluminosilicate glass in this application is preferably 40%$\leqq$$Al_2O_3$+MgO+$Y_2O_3$$\leqq$60%.

A function of $B_2O_3$ in the glass is to reduce a melting temperature and improve a forming property of the glass. $B_2O_3$ in the glass has two existence forms: a $[BO_3]$ trihedron and a $[BO_4]$ tetrahedron. When the glass includes both $Al_2O_3$

and $B_2O_3$, $Na^+$ preferentially performs charge compensation for a $[AlO_4]$ tetrahedron, and superfluous $Na^+$ performs charge compensation for $[BO_4]$ to form a tetrahedron. Otherwise, $B_2O_3$ exists in a form of a $[BO_3]$ trihedron. Based on this, to meet a property requirement, a mole percentage of $B_2O_3$ in the yttrium aluminosilicate glass in this application is preferably 2-10%.

As a common nucleation agent, $ZrO_2$ has relatively high content. This helps improve a Young's modulus and Vickers hardness. However, solubility of $ZrO_2$ in the glass is limited, and excessively high content causes devitrification of the glass. Based on this, to meet a property requirement, a mole percentage of $ZrO_2$ in the yttrium aluminosilicate glass provided in this application is preferably 1-15%. Further, properties such as average hardness, fracture strength, and fracture toughness of the manufactured yttrium aluminosilicate glass are improved, to adjust properties such as scratch resistance and drop resistance of the glass. In addition, $ZrO_2$ in the yttrium aluminosilicate glass in this application can deflect a microcrack propagation path, so that drop resistance of the glass is further improved. It may also be learned from property detection parameters of the yttrium aluminosilicate glass in subsequent embodiments that the yttrium aluminosilicate glass in embodiments of this application has higher Vickers hardness and better fracture toughness.

The alkali metal oxide $Na_2O$ is a main network modifier and is also a main participant in ion exchange. Content of $Na_2O$ in the glass system not only greatly affects the network structure of the glass, but also greatly affects an ion exchange process. As described above, when the content of $Na_2O$ is small, a cation with high field strength (for example, $Li^+$, $B^{3+}$, or $Be^{2+}$) interferes with an ion exchange effect. Therefore, the content of $ZrO_2$ needs to have an appropriate interval. Based on this, to meet a chemical strengthening requirement, a mole percentage of $Li_2O+Na_2O+K_2O$ in the yttrium aluminosilicate glass in this application is preferably $0.3\%\leq Li_2O+Na_2O+K_2O\leq 15\%$. A mole percentage of $Li_2O+Na_2O$ is preferably $4\%\leq Li_2O+Na_2O\leq 37\%$, and a mole percentage of $K_2O$ is preferably 0.1-15%. Therefore, after chemical strengthening is performed on the yttrium aluminosilicate glass in embodiments of this application, chemically strengthened glass with better properties such as surface hardness, flexural strength, and fracture toughness can be obtained.

In some implementations of this application, the yttrium aluminosilicate glass may further include a clarifying agent, for example, $Sb_2O_3$. $Sb_2O_3$ may be decomposed at a high temperature in a glass melting process, and gas is generated through gasification or viscosity of molten glass is reduced, so that bubbles in the molten glass are eliminated. In addition, during preparation, the glass presents light yellow due to an internal vacancy defect. A coloring problem of the glass can be resolved by adding $Sb_2O_3$, so that the glass is colorless and transparent. Based on this, to meet a property requirement, a mole percentage of $Sb_2O_3$ in the yttrium aluminosilicate glass in this application is preferably 0.1-10%. Further, a better melting effect can be achieved by adding $Sb_2O_3$.

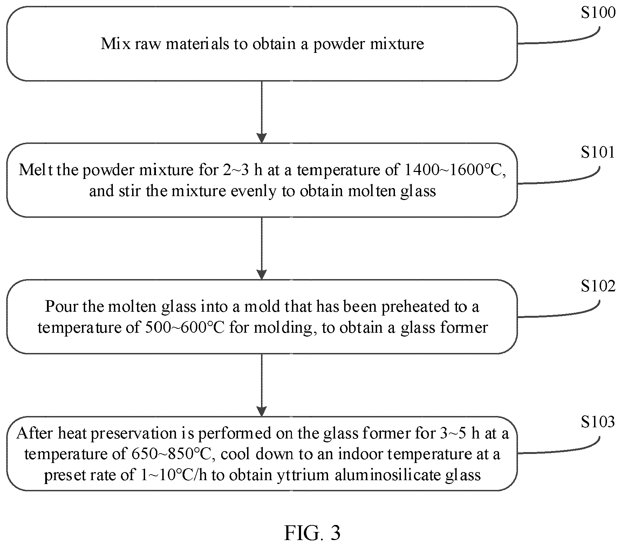

This application further provides a preparation method for the foregoing yttrium aluminosilicate glass. Refer to FIG. 3. The method specifically includes the following steps S100 to S103.

S100: Mix raw materials to obtain a powder mixture.

S101: Melt the powder mixture for 2~3 h at a temperature of 1400~1600°C, and stir the mixture evenly to obtain molten glass.

S102: Pour the molten glass into a mold that has been preheated to a temperature of 500~600°C for molding, to obtain a glass former.

S103: After heat preservation is performed on the glass former for 3~5 h at a temperature of 650~850°C, cool down to an indoor temperature at a preset rate of 1~10°C/h to obtain yttrium aluminosilicate glass.

In some implementations of this application, components of the raw materials include $SiO_2$, $Al_2O_3$, MgO, $Y_2O_3$, $TiO_2$, $ZrO_2$, $Na_2O$, $Li_2O$, $K_2O$, $B_2O_3$, BaO, SrO, $Sb_2O_3$, and $La_2O_3$. It should be noted that the raw materials may be mixed based on the foregoing configuration.

It should be noted that, in this application, components of the foregoing raw materials and the manufactured yttrium aluminosilicate glass are all represented by a reference mole percentage of an oxide. However, in an actual preparation process, the raw material may be another form of material including the foregoing oxide. Therefore, a finally obtained oxide needs only to meet a configuration condition of the foregoing oxide.

In an implementation, expressed by a mass ratio of the yttrium aluminosilicate glass, the raw materials may include: 19.08 g $SiO_2$, 24.46 g $Al_2O_3$, 8.06 g MgO, 22.57 g $Y_2O_3$, 2.00 g $TiO_2$, 4.31 g $ZrO_2$, 6.36 g $Na_2CO_3$, 1.48 g $Li_2CO_3$, 0.69 g $K_2CO_3$, 1.79 g $H_3BO_3$, 1.38 g $BaCO_3$, 0.15 g $SrCO_3$, 0.33 g $La_2O_3$, and 0.29 g $Sb_2O_3$.

In some implementations of this application, after the raw materials are accurately weighed, the raw materials are placed in a drum-type ball mill for full grinding and even mixing, to obtain the powder mixture. Then, the powder mixture is heated at a high temperature and molten. After the powder mixture is molten, the mechanical mixture of the raw materials is converted into a complex melt, that is, the molten glass. After the molten glass is obtained, the molten glass needs to be molded in the mold to obtain the glass former. It should be noted that a production process of the glass former is a process of converting the molten glass into a product with a geometric shape. Finally, the glass former is annealed. Annealing mainly means that the glass former is placed in an annealing kiln, and is cooled down at a low speed after specific time, to reduce or eliminate, as much as possible, thermal stress generated in the glass. In the preparation method provided in this application, an appropriate quantity of alkali metal oxides and glass formers are introduced to reduce a glass melting temperature, and further improve a glass forming capability.

In addition, the yttrium aluminosilicate glass provided in this application may also be used in fields such as building and transportation. For example, the yttrium aluminosilicate glass may be used in a building material as a glass window, a glass countertop, or the like, or may be used in transportation equipment as a window of a transportation vehicle (a car, a train, a plane, or the like).

To better understand the technical solutions and technical effects of this application, the following further describes 11 embodiments. In different embodiments, components of the yttrium aluminosilicate glass are different. For details, refer to Table 2. Content of each component is represented by a mole percentage (mol%).

## Table 2

| Component (mol%) | Embodiment 1 | Embodiment 2 | Embodiment 3 | Embodiment 4 | Embodiment 5 | Embodiment 6 | Embodiment 7 | Embodiment 8 | Embodiment 9 | Embodiment 10 | Embodiment 11 |
|---|---|---|---|---|---|---|---|---|---|---|---|
| $SiO_2$ | 20 | 20 | 20 | 21 | 21 | 29 | 30 | 40 | 50 | 50 | 20 |
| $Al_2O_3$ | 15 | 40 | 16 | 16 | 16 | 24 | 15 | 16 | 15 | 15 | 40 |
| $MgO$ | 10 | 10 | 11 | 11 | 11 | 20 | 35 | 12 | 10 | 10 | 10 |
| $Y_2O_3$ | 5 | 5 | 35 | 6 | 6 | 10 | 5 | 10 | 5 | 5 | 5 |
| $TiO_2$ | 10 | 2 | 1 | 15 | 1 | 2.5 | 0.1 | 1 | 1 | 1 | 2 |
| $ZrO_2$ | 10 | 2 | 2 | 15 | 1 | 3.5 | 0.1 | 1 | 2 | 2 | 2 |
| $Na_2O$ | 7 | 5 | 2 | 5 | 15 | 6 | 2 | 2 | 3.5 | 3.5 | 0.1 |
| $Li_2O$ | 6 | 3 | 2 | 4 | 15 | 2 | 1 | 1 | 3 | 0.1 | 3 |
| $K_2O$ | 5 | 2 | 0.2 | 1 | 7 | 0.5 | 1 | 15 | 0.1 | 3 | 2 |
| $B_2O_3$ | 5.9 | 0.5 | 10 | 1 | 1.6 | 1.5 | 0.5 | 0.7 | 0.1 | 0.1 | 0.5 |
| $BaO$ | 3.9 | 0.1 | 0.2 | 1 | 2 | 0.7 | 10 | 1 | 0.1 | 0.1 | 5 |
| $SrO$ | 2 | 0.1 | 0.3 | 3.8 | 3 | 0.1 | 0.1 | 0.1 | 10 | 10 | 0.1 |
| $La_2O_3$ | 0.1 | 10 | 0.1 | 0.1 | 0.2 | 0.1 | 0.1 | 0.1 | 0.1 | 0.1 | 10 |
| $Sb_2O_3$ | 0.1 | 0.3 | 0.2 | 0.1 | 0.2 | 0.1 | 0.1 | 0.1 | 0.1 | 0.1 | 0.3 |

It should be noted that an yttrium aluminosilicate glass preparation method in each embodiment may be the foregoing preparation method, and details are not described herein again.

**Embodiment 1**

For components of raw materials, refer to Table 2. A specific preparation process is as follows:

S111: $SiO_2$, $Al_2O_3$, $MgO$, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are

mainly used as raw materials. The raw materials are weighted and taken based on the following masses: 12.01 g $SiO_2$, 15.29 g $Al_2O_3$, 4.03 g MgO, 11.29 g $Y_2O_3$, 7.98 g $TiO_2$, 12.32 g $ZrO_2$, 7.42 g $Na_2CO_3$, 4.44 g $Li_2CO_3$, 6.91 g $K_2CO_3$, 7.06 g $H_3BO_3$, 7.69 g $BaCO_3$, 2.95 g $SrCO_3$, 0.33 g $La_2O_3$, and 0.29 g $Sb_2O_3$. The raw materials are placed in a drum-type ball mill for full grinding and even mixing to obtain a powder mixture.

S112: Melt the powder mixture for 2 h at a temperature of 1520°C, and stir the mixture evenly to obtain even molten glass.

S113: Pour the molten glass into a mold that has been preheated to a temperature of 550°C for molding, to obtain a glass former.

S114: After heat preservation is performed on the glass former for 2 h at a temperature of 690°C, cool down to an indoor temperature at a preset rate of 3°C/h, to obtain yttrium aluminosilicate glass.

**Embodiment 2**

For components of raw materials, refer to Table 2. A specific preparation process is as follows:

S211: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 10.28 g $SiO_2$, 40.77 g $Al_2O_3$, 4.03 g MgO, 11.29 g $Y_2O_3$, 1.60 g $TiO_2$, 2.46 g $ZrO_2$, 5.30 g $Na_2CO_3$, 2.22 g $Li_2CO_3$, 2.76 g $K_2CO_3$, 0.60 g $H_3BO_3$, 0.2 g $BaCO_3$, 0.15 g $SrCO_3$, 32.57 g $La_2O_3$, and 0.87 g $Sb_2O_3$. The raw materials are placed in a drum-type ball mill for full grinding and even mixing to obtain a powder mixture.

S212: Melt the powder mixture for 3 h at a temperature of 1600°C, and stir the mixture evenly to obtain even molten glass.

S213: Pour the molten glass into a mold that has been preheated to a temperature of 550°C for molding, to obtain a glass former.

S214: After heat preservation is performed on the glass former for 3 h at a temperature of 720°C, cool down to an indoor temperature at a preset rate of 1°C/h to obtain yttrium aluminosilicate glass.

**Embodiment 3**

For components of raw materials, refer to Table 2. A specific preparation process is as follows:

S311: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 9.06 g $SiO_2$, 16.31 g $Al_2O_3$, 4.43 g MgO, 79.00 g $Y_2O_3$, 0.80 g $TiO_2$, 2.46 g $ZrO_2$, 2.12 g $Na_2CO_3$, 1.48 g $Li_2CO_3$, 0.28 g $K_2CO_3$, 11.96 g $H_3BO_3$, 0.39 g $BaCO_3$, 0.44 g $SrCO_3$, 0.33 g $La_2O_3$, and 0.58 g $Sb_2O_3$. The raw materials are placed in a drum-type ball mill for full grinding and even mixing to obtain a powder mixture.

S312: Melt the powder mixture for 3 h at a temperature of 1550°C, and stir the mixture evenly to obtain even molten glass.

S313: Pour the molten glass into a mold that has been preheated to a temperature of 550°C for molding, to obtain a glass former.

S314: After heat preservation is performed on the glass former for 3 h at a temperature of 710°C, cool down to an indoor temperature at a preset rate of 1°C/h to obtain yttrium aluminosilicate glass.

**Embodiment 4**

For components of raw materials, refer to Table 2. A specific preparation process is as follows:

S411: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 13.09 g $SiO_2$, 16.31 g $Al_2O_3$, 4.43 g MgO, 13.54 g $Y_2O_3$, 11.98 g $TiO_2$, 18.48 g $ZrO_2$, 5.30 g $Na_2CO_3$, 2.96 g $Li_2CO_3$, 1.38 g $K_2CO_3$, 1.20 g $H_3BO_3$, 1.97 g $BaCO_3$, 5.61 g $SrCO_3$, 0.33 g $La_2O_3$, and 0.29 g $Sb_2O_3$. The raw materials are placed in a drum-type ball mill for full grinding and even mixing to obtain a powder mixture.

S412: Melt the powder mixture for 2 h at a temperature of 1550°C, and stir the mixture evenly to obtain even molten glass.

S413: Pour the molten glass into a mold that has been preheated to a temperature of 550°C for molding, to obtain a glass former.

S414: After heat preservation is performed on the glass former for 3 h at a temperature of 700°C, cool down to an indoor temperature at a preset rate of 1°C/h to obtain yttrium aluminosilicate glass.

**Embodiment 5**

For components of raw materials, refer to Table 2. A specific preparation process is as follows:

S511: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 12.99 g $SiO_2$, 16.31 g $Al_2O_3$, 4.43 g MgO, 13.54 g $Y_2O_3$, 0.80 g $TiO_2$, 1.23 g $ZrO_2$, 15.89 g $Na_2CO_3$, 11.10 g $Li_2CO_3$, 9.67 g $K_2CO_3$, 1.91 g $H_3BO_3$, 3.95 g $BaCO_3$, 4.43 g $SrCO_3$, 0.65 g $La_2O_3$, and 0.58 g $Sb_2O_3$. The raw materials are placed in a drum-type ball mill for full grinding and even mixing to obtain a powder mixture.
S512: Melt the powder mixture for 3 h at a temperature of 1550°C, and stir the mixture evenly to obtain even molten glass.
S513: Pour the molten glass into a mold that has been preheated to a temperature of 550°C for molding, to obtain a glass former.
S514: After heat preservation is performed on the glass former for 3 h at a temperature of 710°C, cool down to an indoor temperature at a preset rate of 4°C/h to obtain yttrium aluminosilicate glass.

**Embodiment 6**

For components of raw materials, refer to Table 2. A specific preparation process is as follows:

S611: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 19.08 g $SiO_2$, 24.46 g $Al_2O_3$, 8.06 g MgO, 22.57 g $Y_2O_3$, 2.00 g $TiO_2$, 4.31 g $ZrO_2$, 6.36 g $Na_2CO_3$, 1.48 g $Li_2CO_3$, 0.69 g $K_2CO_3$, 1.79 g $H_3BO_3$, 1.38 g $BaCO_3$, 0.15 g $SrCO_3$, 0.33 g $La_2O_3$, and 0.29 g $Sb_2O_3$. The raw materials are placed in a drum-type ball mill for full grinding and even mixing to obtain a powder mixture.
S612: Melt the powder mixture for 2 h at a temperature of 1560°C, and stir the mixture evenly to obtain even molten glass.
S613: Pour the molten glass into a mold that has been preheated to a temperature of 550°C for molding, to obtain a glass former.
S614: After heat preservation is performed on the glass former for 2 h at a temperature of 720°C, cool down to an indoor temperature at a preset rate of 5°C/h to obtain yttrium aluminosilicate glass.

**Embodiment 7**

For components of raw materials, refer to Table 2. A specific preparation process is as follows:

S711: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 21.39 g $SiO_2$, 15.29 g $Al_2O_3$, 14.10 g MgO, 11.29 g $Y_2O_3$, 0.08 g $TiO_2$, 0.12 g $ZrO_2$, 2.12 g $Na_2CO_3$, 0.74 g $Li_2CO_3$, 1.38 g $K_2CO_3$, 0.60 g $H_3BO_3$, 19.73 g $BaCO_3$, 0.15 g $SrCO_3$, 0.33 g $La_2O_3$, and 0.29 g $Sb_2O_3$. The raw materials are placed in a drum-type ball mill for full grinding and even mixing to obtain a powder mixture.
S712: Melt the powder mixture for 3 h at a temperature of 1560°C, and stir the mixture evenly to obtain even molten glass.
S713: Pour the molten glass into a mold that has been preheated to a temperature of 550°C for molding, to obtain a glass former.
S714: After heat preservation is performed on the glass former for 2 h at a temperature of 720°C, cool down to an indoor temperature at a preset rate of 5°C/h to obtain yttrium aluminosilicate glass.

**Embodiment 8**

For components of raw materials, refer to Table 2. A specific preparation process is as follows:

S811: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 24.79 g $SiO_2$, 16.31 g $Al_2O_3$, 4.83 g MgO, 22.57 g $Y_2O_3$, 0.80 g $TiO_2$, 1.23 g $ZrO_2$, 2.12 g $Na_2CO_3$, 0.74 g $Li_2CO_3$, 20.72 g $K_2CO_3$, 0.84 g $H_3BO_3$, 1.97 g $BaCO_3$, 0.15 g $SrCO_3$, 0.33 g $La_2O_3$, and 0.29 g $Sb_2O_3$. The raw materials are placed in a drum-type ball mill for full grinding and even mixing to obtain a powder mixture.
S812: Melt the powder mixture for 3 h at a temperature of 1540°C, and stir the mixture evenly to obtain even molten glass.

S813: Pour the molten glass into a mold that has been preheated to a temperature of 550°C for molding, to obtain a glass former.

S814: After heat preservation is performed on the glass former for 2 h at a temperature of 710°C, cool down to an indoor temperature at a preset rate of 10°C/h to obtain yttrium aluminosilicate glass.

## Embodiment 9

For components of raw materials, refer to Table 2. A specific preparation process is as follows:

S911: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 35.06 g $SiO_2$, 15.29 g $Al_2O_3$, 4.03 g MgO, 11.29 g $Y_2O_3$, 0.80 g $TiO_2$, 2.46 g $ZrO_2$, 3.71 g $Na_2CO_3$, 2.22 g $Li_2CO_3$, 0.14 g $K_2CO_3$, 0.12 g $H_3BO_3$, 0.20 g $BaCO_3$, 14.76 g $SrCO_3$, 0.33 g $La_2O_3$, and 0.29 g $Sb_2O_3$. The raw materials are placed in a drum-type ball mill for full grinding and even mixing to obtain a powder mixture.

S912: Melt the powder mixture for 2 h at a temperature of 1540°C, and stir the mixture evenly to obtain even molten glass.

S913: Pour the molten glass into a mold that has been preheated to a temperature of 600°C for molding, to obtain a glass former.

S914: After heat preservation is performed on the glass former for 2 h at a temperature of 710°C, cool down to an indoor temperature at a preset rate of 3°C/h to obtain yttrium aluminosilicate glass.

## Embodiment 10

For components of raw materials, refer to Table 2. A specific preparation process is as follows:

S1011: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 30.04 g $SiO_2$, 15.29 g $Al_2O_3$, 4.03 g MgO, 11.29 g $Y_2O_3$, 0.80 g $TiO_2$, 2.46 g $ZrO_2$, 3.71 g $Na_2CO_3$, 0.07 g $Li_2CO_3$, 4.15 g $K_2CO_3$, 0.12 g $H_3BO_3$, 0.20 g $BaCO_3$, 14.76 g $SrCO_3$, 0.19 g $La_2O_3$, and 0.29 g $Sb_2O_3$.

S1012: Melt the powder mixture for 2.5 h at a temperature of 1540°C, and stir the mixture evenly to obtain even molten glass.

S1013: Pour the molten glass into a mold that has been preheated to a temperature of 600°C for molding, to obtain a glass former.

S1014: After heat preservation is performed on the glass former for 6 h at a temperature of 700°C, cool down to an indoor temperature at a preset rate of 5°C/h to obtain yttrium aluminosilicate glass.

## Embodiment 11

For components of raw materials, refer to Table 2. A specific preparation process is as follows:

S1111: $SiO_2$, $Al_2O_3$, MgO, $Y_2O_3$, $TiO_2$, $ZrO_2$, $Na_2CO_3$, $Li_2CO_3$, $K_2CO_3$, $H_3BO_3$, $BaCO_3$, $SrCO_3$, $La_2O_3$, and $Sb_2O_3$ are mainly used as raw materials. The raw materials are weighted and taken based on the following masses: 12.02 g $SiO_2$, 40.79 g $Al_2O_3$, 4.03 g MgO, 11.29 g $Y_2O_3$, 1.6 g $TiO_2$, 2.46 g $ZrO_2$, 0.11 g $Na_2CO_3$, 2.22 g $Li_2CO_3$, 2.76 g $K_2CO_3$, 0.62 g $H_3BO_3$, 9.87 g $BaCO_3$, 14.76 g $SrCO_3$, 16.69 g $La_2O_3$, and 0.29 g $Sb_2O_3$.

S1112: Melt the powder mixture for 5 h at a temperature of 1530°C, and stir the mixture evenly to obtain even molten glass.

S1113: Pour the molten glass into a mold that has been preheated to a temperature of 650°C for molding, to obtain a glass former.

S1114: After heat preservation is performed on the glass former for 2 h at a temperature of 750°C, cool down to an indoor temperature at a preset rate of 4°C/h to obtain yttrium aluminosilicate glass.

Property comparison is performed on the yttrium aluminosilicate glass made in the foregoing Embodiment 1 to Embodiment 11. Property test items include: Vickers hardness, a Young's modulus, Mohs hardness, and a light transmittance.

A test result is shown in Table 3.

**Table 3**

| Test item | Vickers hardness | Young's modulus | Mohs hardness |
|---|---|---|---|
| Embodiment 1 | 7.65 GPa | 122.56 GPa | Greater than 7 and less than 8 |
| Embodiment 2 | 7.61 GPa | 130.34 GPa | Greater than 7 and less than 8 |
| Embodiment 3 | 7.85 GPa | 125.55 GPa | Greater than 7 and less than 8 |
| Embodiment 4 | 7.95 GPa | 127.65 GPa | Greater than 7 and less than 8 |
| Embodiment 5 | 8.34 GPa | 130.65 GPa | Greater than 7 and less than 8 |
| Embodiment 6 | 8.63 GPa | 140.65 GPa | Greater than 8 and less than 9 |
| Embodiment 7 | 9.35 GPa | 160.00 GPa | Greater than 8 and less than 9 |
| Embodiment 8 | 6.87 GPa | 120.00 GPa | Greater than 7 and less than 8 |
| Embodiment 9 | 8.73 GPa | 132.12 GPa | Greater than 8 and less than 9 |
| Embodiment 10 | 8.779 GPa | 136.77 GPa | Greater than 8 and less than 9 |
| Embodiment 11 | 8.642 GPa | 129.12 GPa | Greater than 8 and less than 9 |

It can be learned from the test result in Table 3 that the Young's modulus of the yttrium aluminosilicate glass provided in this application is greater than 100 GPa, and is preferably greater than 160 GPa. The Vickers hardness is greater than 6.87 GPa, and is preferably greater than 9.35 GPa. The Mohs hardness is greater than or equal to 7 and less than or equal to 9. The yttrium aluminosilicate glass manufactured by adding oxide content with a high bulk density, a high elastic modulus coefficient, and a high specific modulus coefficient to a silicate system has high Vickers hardness, high Mohs hardness, and a high Young's modulus. Therefore, a structure density and strength of the glass are improved, and a penetration depth of a sharp object can be reduced. In addition, compressive stress introduced by the yttrium aluminosilicate glass through ion exchange in embodiments of this application can suppress crack propagation. This further improves drop resistance of the glass.

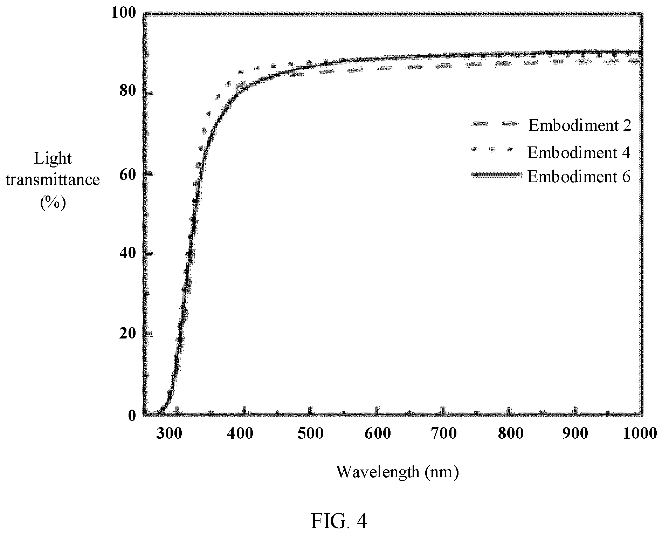

In some implementations of this application, the yttrium aluminosilicate glass is transparent in a visible light band, and has a high transmittance. FIG. 4 shows light transmittance curves of yttrium aluminosilicate glass according to Embodiment 2, Embodiment 4, and Embodiment 6 of this application. Refer to FIG. 4. In Embodiment 2, Embodiment 4, and Embodiment 6, a light transmittance of yttrium aluminosilicate glass in a visible light band (380 nm-780 nm) reaches 88% or more, so that an application requirement in fields such as a display of an electronic device can be met.

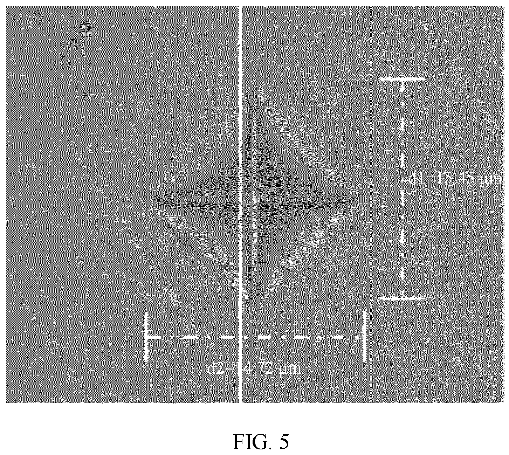

FIG. 5 is a diagram of a test on Vickers hardness of yttrium aluminosilicate glass according to Embodiment 7 of this application. Refer to FIG. 5. Lengths of diagonals of an indentation on a surface of the yttrium aluminosilicate glass in Embodiment 7 are respectively: d1=15.45 μm and d2=14.72 μm. Then, it is learned that an average length of the diagonals of the indentation is d=15.085 μm. The obtained average length d of the diagonals of the indentation is substituted into a first formula to calculate Vickers hardness, and obtained Vickers hardness is 7.65 GPa. The first formula is as follows:

$$\mathrm{H}v = \frac{2P\sin\theta}{d^2} \quad (1)$$

Hv is the Vickers hardness; P is applied load; d is the average length of the diagonals of the indentation; and $\theta$=136°.

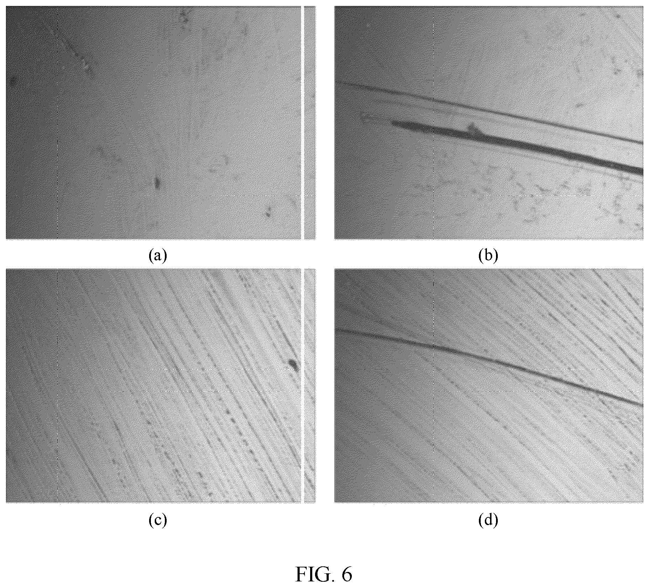

a in FIG. 6 is a micrograph of Mohs hardness-based scratches on yttrium aluminosilicate glass according to Embodiment 1 of this application. Refer to a in FIG. 6. In this application, a Mohs hardness test is performed on the yttrium aluminosilicate glass in Embodiment 1 by using a level-7 Mohs hardness pen, and it can be learned that there is no scratch on a surface of the yttrium aluminosilicate glass in Embodiment 1.

b in FIG. 6 is a micrograph of Mohs hardness-based scratches on yttrium aluminosilicate glass according to Embodiment 1 of this application. Refer to b in FIG. 6. In this application, a Mohs hardness test is performed on the yttrium aluminosilicate glass in Embodiment 1 by using a level-8 Mohs hardness pen, and it can be learned that there are scratches on a surface of the yttrium aluminosilicate glass in Embodiment 1. Therefore, Mohs hardness of the yttrium aluminosilicate glass in Embodiment 1 is greater than 7 and less than 8.

c in FIG. 6 is a micrograph of Mohs hardness-based scratches on yttrium aluminosilicate glass according to Embodiment 6 of this application. Refer to c in FIG. 6. In this application, a Mohs hardness test is performed on the yttrium aluminosilicate glass in Embodiment 6 by using a level-8 Mohs hardness pen, and it can be learned that there is no scratch on a surface of the yttrium aluminosilicate glass in Embodiment 6.

**EP 4 501 873 B1**

d in FIG. 6 is a micrograph of Mohs hardness-based scratches on yttrium aluminosilicate glass according to Embodiment 6 of this application. Refer to d in FIG. 6. In this application, a Mohs hardness test is performed on the yttrium aluminosilicate glass in Embodiment 6 by using a level-9 Mohs hardness pen, and it can be learned that there are scratches on a surface of the yttrium aluminosilicate glass in Embodiment 6. Therefore, Mohs hardness of the yttrium aluminosilicate glass in Embodiment 6 is greater than 8 and less than 9.

It may be understood that various numbers in embodiments of this application are merely used for differentiation for ease of description, and are not used to limit the scope of embodiments of this application. It may be understood that in embodiments of this application, sequence numbers of processes do not mean a sequence of execution. The sequence of execution of the processes should be determined according to functions and internal logic of the processes, and should not constitute any limitation on an implementation process of embodiments of this application.

**Claims**

1. Yttrium aluminosilicate glass comprising, expressed in mole percentage of an oxide, the following components:

   $SiO_2$ 20-50%;

   $Al_2O_3$ 15-40%;

   MgO 10-35%;

   $Y_2O_3$ 5-35%;

   $TiO_2$ 0.1-15%;

   $ZrO_2$ 0.1-15%;

   $Na_2O$ 0.1-15%;

   $Li_2O$ 0.1-15%;

   $K_2O$ 0.1-15%;

   $B_2O_3$ 0.1-10%;

   BaO 0.1-10%;

   SrO 0.1-10%;

   $Sb_2O_3$ 0.1-10%;

   and

   $La_2O_3$ 0.1-10%.

2. The yttrium aluminosilicate glass according to claim 1, wherein, expressed in mole percentage of an oxide, $0.3\% \leqq Li_2O + Na_2O + K_2O \leqq 15\%$.

3. The yttrium aluminosilicate glass according to claim 1 or 2, wherein, expressed in mole percentage of an oxide, $40\% \leqq Al_2O_3 + MgO + Y_2O_3 \leqq 60\%$.

4. The yttrium aluminosilicate glass according to any one of claims 1-3, wherein, expressed in mole percentage of an oxide, the mole percentage of $ZrO_2$ is 1-15%.

5. The yttrium aluminosilicate glass according to any one of claims 1-4, wherein, expressed in mole percentage of an oxide, the mole percentage of $B_2O_3$ is 2-10%.

6. The yttrium aluminosilicate glass according to any one of claims 1-5, wherein a light transmittance of the yttrium aluminosilicate glass in a visible light band is greater than or equal to 88%.

7. The yttrium aluminosilicate glass according to any one of claims 1-5, wherein a Young's modulus of the yttrium aluminosilicate glass is greater than 100 GPa.

8. The yttrium aluminosilicate glass according to any one of claims 1-5, wherein Vickers hardness of the yttrium aluminosilicate glass is greater than 6.87 GPa.

9. The yttrium aluminosilicate glass according to any one of claims 1-5, wherein Mohs hardness of the yttrium aluminosilicate glass is greater than or equal to 7 and less than or equal to 9.

10. An yttrium aluminosilicate glass preparation method, specifically comprising the following steps:

mixing raw materials required for meeting the yttrium aluminosilicate glass according to any one of claims 1-9, to obtain a powder mixture after mixing;
melting the powder mixture for 2~3 h at a temperature of 1400~1600°C, and stirring the mixture evenly to obtain molten glass;
pouring the molten glass into a preheated mold for molding, to obtain a glass former; and
after heat preservation is performed on the glass former for 3~5 h at a temperature of 650~850°C, cooling down to an indoor temperature at a preset rate to obtain the yttrium aluminosilicate glass.

11. The method according to claim 10, wherein a temperature of the mold is 500~600°C.

12. The method according to claim 11, wherein the preset rate is 1~10°C/h.

13. The method according to claim 12, wherein expressed by a mass ratio of the yttrium aluminosilicate glass, the raw materials comprise: 19.08 g $SiO_2$, 24.46 g $Al_2O_3$, 8.06 g MgO, 22.57 g $Y_2O_3$, 2.00 g $TiO_2$, 4.31 g $ZrO_2$, 6.36 g $Na_2CO_3$, 1.48 g $Li_2CO_3$, 0.69 g $K_2CO_3$, 1.79 g $H_3BO_3$, 1.38 g $BaCO_3$, 0.15 g $SrCO_3$, 0.33 g $La_2O_3$, and 0.29 g $Sb_2O_3$.

14. The method according to claim 13, specifically comprising the following steps:

mixing the raw materials, to obtain a powder mixture after mixing;
melting the powder mixture for 2 h at a temperature of 1560°C, and stirring the mixture evenly to obtain molten glass;
pouring the molten glass into a mold that has been preheated to a temperature of 550°C for molding, to obtain a glass former; and
after heat preservation is performed on the glass former for 2 h at a temperature of 720°C, cooling down to an indoor temperature at a preset rate of 5°C/h to obtain the yttrium aluminosilicate glass.

15. An electronic device (100) comprising a display cover plate (101), wherein the display cover plate (101) uses the yttrium aluminosilicate glass according to any one of claims 1-9.

**Patentansprüche**

1. Yttriumaluminosilikatglas, umfassend, ausgedrückt in Molprozent eines Oxids, die folgenden Bestandteile:

$SiO_2$ 20-50 %;

$Al_2O_3$ 15-40 %;

MgO 10-35 %;

$Y_2O_3$ 5-35 %;

$TiO_2$ 0,1-15 %;

ZrO$_2$ 0,1-15 %;

Na$_2$O 0,1-15 %;

Li$_2$O 0,1-15 %;

K$_2$O 0,1-15 %;

B$_2$O$_3$ 0,1-10 %;

BaO 0,1-10 %;

SrO 0,1-10 %;

Sb$_2$O$_3$ 0,1-10 %;

und

La$_2$O$_3$ 0,1-10 %.

2. Das Yttriumaluminosilikatglas nach Anspruch 1, wobei, ausgedrückt in Molprozent eines Oxids, 0,3 % $\leqq$ Li$_2$O+Na$_2$O+K$_2$O $\leqq$ 15 %.

3. Das Yttriumaluminosilikatglas nach Anspruch 1 oder 2, wobei, ausgedrückt in Molprozent eines Oxids, 40 % $\leqq$ Al$_2$O$_3$ +MgO+Y$_2$O$_3$ $\leqq$ 60 %.

4. Das Yttrium-Aluminiumsilikatglas gemäß einem der Ansprüche 1-3, wobei der Molenanteil von ZrO$_2$, ausgedrückt in Molprozent eines Oxids, 1-15 % beträgt.

5. Das Yttrium-Aluminiumsilikatglas gemäß einem der Ansprüche 1-4, wobei der Molenanteil von B$_2$O$_3$, ausgedrückt in Molprozent eines Oxids, 2-10 % beträgt.

6. Das Yttriumaluminosilikatglas nach einem der Ansprüche 1-5, wobei die Lichtdurchlässigkeit des Yttriumaluminosilikatglases im sichtbaren Lichtbereich größer oder gleich 88 % ist.

7. Das Yttrium-Aluminiumsilikatglas gemäß einem der Ansprüche 1-5, wobei der Elastizitätsmodul des Yttrium-Aluminiumsilikatglases größer als 100 GPa ist.

8. Das Yttriumaluminosilikatglas nach einem der Ansprüche 1-5, wobei die Vickershärte des Yttriumaluminosilikatglases größer als 6,87 GPa ist.

9. Das Yttriumaluminosilikatglas nach einem der Ansprüche 1-5, wobei die Mohshärte des Yttriumaluminosilikatglases größer oder gleich 7 und kleiner oder gleich 9 ist.

10. Ein Verfahren zur Herstellung von Yttriumaluminosilikatglas, umfassend insbesondere die folgenden Schritte:

Mischen der Rohstoffe, die für die Herstellung des Yttriumaluminosilikatglases nach einem der Ansprüche 1-9 erforderlich sind, wobei nach dem Mischen ein Pulvergemisch erhalten wird;
Schmelzen des Pulvergemisches für 2 bis 3 Stunden bei einer Temperatur von 1400 bis 1600 °C und gleichmäßiges Rühren der Mischung, um eine Glasschmelze zu erhalten;
Eingießen der Glasschmelze in eine vorgeheizte Form zur Formgebung, um einen Glasvorformling zu erhalten; und
Nachdem eine Wärmebehandlung am Glasvorformling für 3-5 Stunden bei einer Temperatur von 650-850 °C durchgeführt wurde, wird auf Raumtemperatur mit einer vorgegebenen Abkühlrate abgekühlt, um das Yttrium-Aluminosilikatglas zu erhalten.

11. Verfahren nach Anspruch 10, wobei die Temperatur der Form 500-600 °C beträgt.

**12.** Verfahren nach Anspruch 11, wobei die voreingestellte Abkühlrate 1-10 °C/h beträgt.

**13.** Verfahren nach Anspruch 12, wobei ausgedrückt durch das Massenverhältnis des YttriumAluminosilikatglases die Ausgangsmaterialien umfassen: 19,08 g $SiO_2$, 24,46 g $Al_2O_3$, 8,06 g MgO, 22,57 g $Y_2O_3$, 2,00 g $TiO_2$, 4,31 g $ZrO_2$, 6,36 g $Na_2CO_3$, 1,48 g $Li_2CO_3$, 0,69 g $K_2CO_3$, 1,79 g $H_3BO_3$, 1,38 g $BaCO_3$, 0,15 g $SrCO_3$, 0,33 g $La_2O_3$ und 0,29 g $Sb_2O_3$.

**14.** Verfahren nach Anspruch 13, das insbesondere die folgenden Schritte umfasst:

Mischen der Ausgangsmaterialien, um nach dem Mischen ein Pulvergemisch zu erhalten;
Schmelzen des Pulvergemischs für 2 Stunden bei einer Temperatur von 1560 °C und gleichmäßiges Umrühren der Mischung, um Schmelzglas zu erhalten;
Gießen des Schmelzglases in eine auf 550 °C vorgeheizte Form zur Formgebung, um einen Glasvorformling zu erhalten; und
Nachdem eine Wärmebehandlung am Glasvorformling für 2 Stunden bei einer Temperatur von 720 °C durchgeführt wurde, wird auf Raumtemperatur mit einer voreingestellten Abkühlrate von 5 °C/h abgekühlt, um das Yttrium-Aluminosilikatglas zu erhalten.

**15.** Elektronisches Gerät (100) mit einer Display-Abdeckplatte (101), wobei die Display-Abdeckplatte (101) das Yttrium-Aluminosilikatglas gemäß einem der Ansprüche 1-9 verwendet.

**Revendications**

**1.** Verre d'aluminosilicate d'yttrium comprenant, exprimé en pourcentage molaire d'oxyde, les composants suivants :

$SiO_2$ 20-50 % ;

$Al_2O_3$ 15-40 % ;

MgO 10-35 % ;

$Y_2O_3$ 5-35 % ;

$TiO_2$ 0,1-15 % ;

$ZrO_2$ 0,1-15 % ;

$Na_2O$ 0,1-15 % ;

$Li_2O$ 0,1-15 % ;

$K_2O$ 0,1-15 % ;

$B_2O_3$ 0,1-10 % ;

BaO 0,1-10 % ;

SrO 0,1-10 % ;

$Sb_2O_3$ 0,1-10 % ;

et

$La_2O_3$ 0,1-10 %.

**2.** Verre d'aluminosilicate d'yttrium selon la revendication 1, dans lequel, exprimé en pourcentage molaire d'oxyde, 0,3

% $\leqq$ Li$_2$O+Na$_2$O+K$_2$O $\leqq$ 15 %.

**3.** Verre d'aluminosilicate d'yttrium selon la revendication 1 ou 2, dans lequel, exprimé en pourcentage molaire d'oxyde, 40 % $\leqq$ Al$_2$O$_3$+MgO+Y$_2$O$_3$ $\leqq$ 60 %.

**4.** Verre d'aluminosilicate d'yttrium selon l'une quelconque des revendications 1 à 3, dans lequel, exprimé en pourcentage molaire d'oxyde, le pourcentage molaire de ZrO$_2$ est de 1-15 %.

**5.** Verre d'aluminosilicate d'yttrium selon l'une quelconque des revendications 1 à 4, dans lequel, exprimé en pourcentage molaire d'oxyde, le pourcentage molaire de B$_2$O$_3$ est de 2-10 %.

**6.** Verre d'aluminosilicate d'yttrium selon l'une quelconque des revendications 1 à 5, dans lequel la transmittance lumineuse du verre d'aluminosilicate d'yttrium dans la bande de lumière visible est supérieure ou égale à 88 %.

**7.** Verre d'aluminosilicate d'yttrium selon l'une quelconque des revendications 1 à 5, dans lequel le module de Young du verre d'aluminosilicate d'yttrium est supérieur à 100 GPa.

**8.** Verre d'aluminosilicate d'yttrium selon l'une quelconque des revendications 1 à 5, dans lequel la dureté Vickers du verre d'aluminosilicate d'yttrium est supérieure à 6,87 GPa.

**9.** Verre d'aluminosilicate d'yttrium selon l'une quelconque des revendications 1 à 5, dans lequel la dureté Mohs du verre d'aluminosilicate d'yttrium est supérieure ou égale à 7 et inférieure ou égale à 9.

**10.** Procédé de préparation d'un verre d'aluminosilicate d'yttrium, qui consiste spécifiquement en les étapes suivantes :

mélanger les matières premières nécessaires pour satisfaire à l'un quelconque des verres d'aluminosilicate d'yttrium selon les revendications 1 à 9 pour obtenir un mélange pulvérulent après mélange ;
faire fondre le mélange pulvérulent pendant 2 à 3 h à une température de 1400 à 1600 °C, et agiter le mélange de manière homogène pour obtenir du verre fondu ;
verser le verre fondu dans un moule préchauffé pour le moulage, afin d'obtenir une ébauche de verre ; et
après avoir réalisé une conservation thermique sur le préforme de verre pendant 3 à 5 heures à une température de 650 à 850 °C, refroidissez à température ambiante à une vitesse prédéterminée afin d'obtenir le verre d'aluminosilicate d'yttrium.

**11.** Procédé selon la revendication 10, dans lequel la température du moule est de 500 à 600 °C.

**12.** Procédé selon la revendication 11, dans lequel la vitesse prédéfinie est de 1 à 10 °C/h.

**13.** Procédé selon la revendication 12, dans lequel, exprimé par un rapport massique du verre d'aluminosilicate d'yttrium, les matières premières comprennent : 19,08 g de SiO$_2$, 24,46 g d' Al$_2$O$_3$, 8,06 g de MgO, 22,57 g de Y$_2$O$_3$, 2,00 g de TiO$_2$, 4,31 g de ZrO$_2$, 6,36 g de Na$_2$CO$_3$, 1,48 g de Li$_2$CO$_3$, 0,69 g de K$_2$CO$_3$, 1,79 g de H$_3$BO$_3$, 1,38 g de BaCO$_3$, 0,15 g de SrCO$_3$, 0,33 g de La$_2$O$_3$, et 0,29 g de Sb$_2$O$_3$.

**14.** Procédé selon la revendication 13, comprenant spécifiquement les étapes suivantes :

mélanger les matières premières pour obtenir un mélange en poudre après mélange ;
faire fondre le mélange en poudre pendant 2 heures à une température de 1560 °C, puis mélanger uniformément pour obtenir du verre fondu ;
verser le verre fondu dans un moule préchauffé à une température de 550 °C pour le moulage, afin d'obtenir un préforme de verre ; et
après avoir réalisé une conservation thermique sur le préforme de verre pendant 2 heures à une température de 720 °C, refroidir à température ambiante à une vitesse prédéterminée de 5 °C/h afin d'obtenir le verre d'aluminosilicate d'yttrium.

**15.** Un dispositif électronique (100) comprenant une plaque de protection d'affichage (101), la plaque de protection d'affichage (101) utilisant le verre d'aluminosilicate d'yttrium selon l'une quelconque des revendications 1 à 9.

FIG. 1

Glass forming property   Machining property   Optical property   Mechanical property

■ Silicate glass    ■ Aluminate glass    ■ Yttrium aluminosilicate glass

FIG. 2

Mix raw materials to obtain a powder mixture  S100

Melt the powder mixture for 2~3 h at a temperature of 1400~1600°C, and stir the mixture evenly to obtain molten glass  S101

Pour the molten glass into a mold that has been preheated to a temperature of 500~600°C for molding, to obtain a glass former  S102

After heat preservation is performed on the glass former for 3~5 h at a temperature of 650~850°C, cool down to an indoor temperature at a preset rate of 1~10°C/h to obtain yttrium aluminosilicate glass  S103

FIG. 3

FIG. 4

FIG. 5

(a)

(b)

(c)

(d)

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 117486486 A
- CN 202210856670

- US 2019300422 A1